# EUROPEAN PATENT APPLICATION

(11) **EP 2 273 592 A1**
(43) Date of publication of application: **12.01.2011**
(21) Application number: 10761448.9
(22) Date of filing: 08.04.2010
(51) Int. Cl.: H01M 6/16, H01M 4/50

(54) **LITHIUM BATTERY**

(30) Priority: 10.04.2009 JP 2009096219
(71) Applicant: Panasonic Corporation, Kadoma-shi Osaka 571-8501 (JP)
(72) Inventor: MORIGAKI, Kenichi, 1-61 Shiromi 2-chome, Chuo-ku, Osaka-shi, Osaka 540-6207 (JP)
(74) Representative: TBK-Patent
(86) International application number: PCT/JP2010/002569
(87) International publication number: WO 2010/116744

(57) **Abstract**

A lithium battery includes: a positive electrode 10 including a positive electrode active material; a negative electrode 11 including lithium metal or a lithium alloy as a negative electrode active material; a separator 12 interposed between the positive electrode 10 and the negative electrode 11; and an organic electrolyte solution. The positive electrode active material includes γ-β manganese dioxide containing boron and magnesium, and the organic electrolyte solution indudes an aromatic sulfone compound, a non-aqueous solvent, and a lithium salt. The lithium battery has excellent high-temperature storage characteristics.

## Description

### [Technical Field]

The invention relates to lithium batteries. More particularly, the invention relates to an improvement in a positive electrode active material and an organic electrolyte solution for use in a lithium primary battery.

### [Background Art]

Lithium batteries, which have high voltage and high energy density compared with conventional aqueous solution type batteries using an aqueous solution of a supporting salt as an electrolyte, can be easily made compact and lightweight. Further, lithium batteries undergo little deterioration due to self-discharge and the like and have high long-term reliability, compared with aqueous solution type batteries. Lithium batteries are thus used widely, for example, as the main power source or memory back-up power source for small-sized electronic devices and in-car electronic devices.

A typical lithium battery indudes a metal oxide such as manganese dioxide as a positive electrode active material, lithium metal or a lithium alloy as a negative electrode active material, and an organic electrolyte solution. The organic electrolyte solution usually contains a non-aqueous solvent and a lithium salt. Examples of non-aqueous solvents used include high dielectric-constant solvents such as propylene carbonate and γ-butyroiactone and solvents with a low boiling-point and a low viscosity such as 1,2-dimethoxyethane and 3-methyl tetrahydrofuran. Examples of lithium salts used include lithium perchlorate and lithium tetrafluoroborate.

Lithium batteries induding manganese dioxide as a positive electrode active material (hereinafter referred to as "manganese dioxide type lithium batteries") have a problem of deterioration of discharge characteristics after storage at high temperature. For example, when an intermittent pulse discharge is applied for a long time after storage at high temperature, the internal resistance of the battery increases sharply, so the battery cannot be discharged. It is thus necessary to futher improve the high-temperature storage characteristics of manganese dioxide type lithium batteries. There is also another problem of battery swelling after storage at high temperature.

The reason for the deterioration of discharge characteristics of manganese dioxide type lithium batteries after high temperature storage is believed to be the production of gas inside the battery during the high temperature storage. Since 90% or more of the gas produced is carbon dioxide, the gas produced is believed to be a by-product of oxidative decomposition of the non-aqueous solvent by the manganese dioxide.

When coin batteries are stored at high temperature, deterioration of discharge characteristics and battery swelling become evident. In coin batteries, the electrical connection between the positive electrode mixture and the positive electrode current collector, the electrical connection between the positive electrode current collector and the positive electrode case, and the ionic conduction between the positive and negative electrodes through the separator are maintained by the sealing pressure inside the battery. In such a coin battery, the production of gas generates the internal pressure of the battery beyond the sealing pressure, thereby causing the battery to swell significantly and making the electrical connection and the ionic conduction insufficient. As such, even when there is remaining battery capacity, the battery cannot be discharged smoothly.

For example, PTL 1 disdoses λ-β manganese dioxide in which part of the manganese is replaced with other element(s). Examples of other elements substituted for manganese include non-metal and semi-metal elements of groups 13 to 15, alkali metals, alkaline earth metals, and metal elements excluding manganese. PTL2 discloses manganese dioxide with a boron content of 0.1 to 2 mass% and a phosphorus content of 0.02 to 2 mass%. PTL3 discloses a composite oxide containing lithium, manganese, and boron as a positive electrode active material for a secondary battery.

PTL 4 disdoses a method of applying heat and pressure to a positive electrode including manganese dioxide as a positive electrode active material and having a water content (Karl Fischer method) of 100 ppm or less and an alkyl sulfonic add, such as ethylene sulfonic add (CH₂=CH-SO₃H) or ethane sulfonic add (CH₃CH₂-SO₃H), while keeping them in contact with each other. This method can provide a positive electrode whose surface is combined with an organic group represented by the formula: R-SO₃- where R represents a hydrocarbon group.

PTL 5 discloses an organic electrolyte solution which indudes an organic compound containing a SO group or SO₂ group, such as methyl sulfone, methyl sulfoxide, or sulfolane. PTL6 discloses an organic electrolyte solution containing a sultone derivative such as 1,3-propane sultone as well as a solvent mixture of a carbonic acid ester and an ether as a non-aqueous solvent. PTL 7 disdoses an organic electrolyte solution including a nitrile compound and an S=O group containing compound such as methyl benzene sulfonate.

### [Citation List]

### [Patent Literatures]

[PTL 1] Japanese Laid-Open Patent Publication No. 2005-100944
[PTL 2] Japanese Laid-Open Patent Publication No. 2003-217579
[PTL 3] Japanese Laid-Open Patent Publication No. Hei 9-115515
[PTL 4] Japanese Laid-Open Patent Publication No. 2006-228439
[PTL 5] Japanese Laid-Open Patent Publication No. 2000-285928
[PTL 6] Japanese Laid-Open Patent Publication No. 2005-216867
[PTL 7] Japanese Laid-Open Patent Publication No. 2004-179146

### [Summary of Invention]

### [Technical Problem]

When lithium batteries are used as the main power source or memory back-up power source for in-car electronic devices, it is important that they have excellent high-temperature storage characteristics and do not exhibit deterioration of discharge characteristics and battery swelling due to production of gas. The temperature inside a car tends to become high.
In particular, under the hot summer sun, the temperature inside a car becomes as high as 70°C or more, and often reaches a high temperature dose to 80°C partly because a large amount of thermal insulating resin components are used in the dashboard, the inner walls of the doors, and the like. In tropical regions and deserts, the temperature inside a car becomes even higher.

In such circumstances, merely the use of manganese dioxide or composite oxide disclosed in PTLs 1 to 3 as the positive electrode active material cannot sufficiently suppress production of gas when the lithium battery is stored at a high temperature of 100°C or more. Also, according to the method disclosed in PTL 4, there is a large variation in the characteristics of positive electrodes obtained, and positive electrodes with almost constant characteristics cannot be mass-produced. Further, it is necessary to maintain the conditions of heat and pressure application in a narrow range, and the process control is very complicated.

In the case of lithium batteries using the organic electrolyte solutions disclosed in PTL 5 and PTL 7, when they are stored at a high temperature of 100°C or more, production of gas cannot be sufficiently suppressed. In the case of a lithium battery using the organic electrolyte solution disdosed in PTL 6, since the organic electrolyte solution contains a sultone derivative, the decomposition of the non-aqueous solvent is suppressed upon high temperature storage at 100°C or more, but the large-current discharge characteristics deteriorate.

An object of the invention is to provide a lithium battery with excellent high-temperature storage characteristics.

### [Solution to Problem]

The lithium battery of the invention includes: a positive electrode including a positive electrode active material; a negative electrode induding lithium metal or a lithium alloy as a negative electrode active material; a separator interposed between the positive electrode and the negative electrode; and an organic electrolyte solution. The positive electrode active material indudes γ-β manganese dioxide containing boron and magnesium, and the organic electrolyte solution indudes an aromatic sulfone compound, a non-aqueous solvent, and a lithium salt.

### [Advantageous Effects of Invention]

The lithium battery of the invention has excellent high-temperature storage characteristics. More specifically, even when the lithium battery of the invention is stored at a high temperature of 100°C or more for a long time, production of gas due to oxidative decomposition of the non-aqueous solvent is significantly suppressed, and deterioration of discharge characteristics and battery swelling are significantly reduced.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

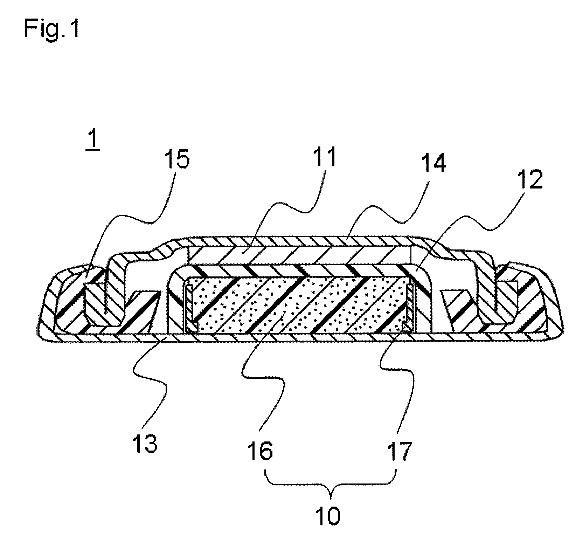

FIG 1 is a longitudinal sectional view schematically showing the configuration of a lithium battery in a first embodiment of the invention.

### [Description of Embodiments]

In the process of finding a solution to the above-described problems, the present inventor has noted the positive electrode active materials of PTL 1. PTL 1 cites λ-β manganese dioxide containing boron and magnesium as a representative positive electrode active material. PTL 1 states that the pulse characteristics of the lithium battery using this manganese dioxide as the positive electrode active material at -40°C after storage at 120°C for 5 days are significantly improved.

The present inventor has conducted further studies on the lithium battery using the λ-β manganese dioxide as the positive electrode active material. He has found that the use of the λ-β manganese dioxide improves the low-temperature pulse characteristics of the lithium battery after high temperature storage, but cannot sufficiently suppress battery swelling and deterioration of discharge characteristics due to high temperature storage at 100°C or more. Among discharge characteristics, the discharge voltage lowers significantly.

Also, the present inventor has examined PTL 7 as well. PTL7 discloses a lithium battery using manganese dioxide serving as the positive electrode active material and an organic electrolyte solution containing a nitrile compound and methyl benzene sulfonate in combination. However, the combined use of the manganese dioxide and the organic electrolyte solution disclosed in PTL 7 cannot sufficiently suppress deterioration of discharge characteristics and battery swelling due to gas produced by oxidative decomposition of the non-aqueous solvent during high temperature storage at 100°C or more.

Based on these findings, the present inventor has conducted further studies. As a result, He has found the combined use of γ-β manganese dioxide containing boron and magnesium, and an organic electrolyte solution containing an aromatic sulfone compound such as methyl benzene sulfonate. He has found that the combined use can suppress the reaction between the γ-β manganese dioxide and the non-aqueous solvent in a high temperature environment at 100°C or more, thereby suppressing an increase in the internal pressure of the battery due to production of gas. As a result, he has found that even upon high temperature storage at 100°C or more, battery swelling and deterioration of discharge characteristics are significantly reduced, and an intermittent pulse discharge, a large-current pulse discharge, etc. can be applied for a long time. The invention has been completed based on this finding.

FIG 1 is a longitudinal sectional view schematically showing the configuration of a lithium battery 1 in a first embodiment of the invention. The lithium battery 1 is a coin battery including a positive electrode 10, a negative electrode 11, a separator 12 interposed between the positive electrode 10 and the negative electrode 11, a positive electrode case 13, a negative electrode case 14, an insulating packing 15, and an organic electrolyte solution (not shown). The positive electrode 10 includes a positive electrode mixture 16 and a positive electrode current collector ring 17. In this embodiment, the positive electrode current collector ring 17 is used as the positive electrode current collector, but there is no limitation thereto. It is also possible to mount the positive electrode mixture 16 directly on the inner face of the positive electrode case 13 without using any positive electrode current collector and use the positive electrode mixture 16 as the positive electrode.

The lithium battery 1 is produced as follows. First, the positive electrode current collector ring 17 is fitted around the positive electrode mixture 16, which is placed in the positive electrode case 13. The separator 12 is mounted thereon. Further, an organic electrolyte solution is injected into the positive electrode case 13. Meanwhile, a molded lithium metal or lithium alloy is pressed to the inner face of the flat portion of the negative electrode case 14 as the negative electrode 11. Subsequently, with the edge of the negative electrode case 14 fitted with the insulating packing 15, the positive electrode case 13 and the negative electrode case 14 are combined. Further, the open edge of the positive electrode case 13 is crimped inward for sealing, to obtain the lithium battery 1. If necessary, the surface of the lithium battery 1 may be fitted with an outer jacket such as a resin film.

The positive electrode mixture 16 contains γ-β manganese dioxide containing boron and magnesium (hereinafter referred to as simply "γ-β manganese dioxide" unless otherwise specified) as the positive electrode active material. The positive electrode mixture 16 can be prepared, for example, by molding a powder of γ-β manganese dioxide.

The γ-β manganese dioxide of this embodiment is characterized by containing boron and magnesium and having a crystal structure in which γ manganese dioxide and β manganese dioxide are coexistent. Preferably, the boron and the magnesium are almost uniformly diffused and permeated throughout the γ-β manganese dioxide particles; however, when they are contained in large amounts, they may be unevenly distributed to the surfaces of the γ-β manganese dioxide particles and the vicinity thereof.

The reason why the γ-β manganese dioxide of this embodiment contributes to an improvement in the high-temperature storage characteristics of the battery 1 is not yet sufficiently dear, but the present inventor presumes the reason to be as follows. The γ-β manganese dioxide of this embodiment has a smaller specific surface area, a lower manganese oxidation number, a lower chemical activity, and the like than conventional γ-β manganese dioxide. Also, an organic electrolyte solution containing an aromatic sulfone compound, which will be described later, is used in combination with the γ-β manganese dioxide of this embodiment. The synergy therebetween results in the above-mentioned significant effects.

The γ-β manganese dioxide of this embodiment can be produced, for example, by mixing commonly available manganese dioxide (hereinafter referred to as "raw material manganese dioxide") with a boron compound and a magnesium compound and baking the resulting mixture. That is, the addition of boron and magnesium to the raw material manganese dioxide by baking can provide the γ-β manganese dioxide of this embodiment which is a mixed crystal of γ manganese dioxide and β manganese dioxide.

Examples of raw material manganese dioxide include γ manganese dioxide such as electrolytic manganese dioxide and chemically synthesized manganese dioxide. Among them, it is preferable to use electrolytic manganese dioxide with a smaller specific surface area than chemically synthesized manganese dioxide, in order to obtain γ-β manganese dioxide with a specific surface area that is in a predetermined range as described below. The mean particle size (volume basis median diameter) of electrolytic manganese dioxide is preferably 20 µm to 60 µm.

A boron compound is a compound containing boron. Preferable examples of boron compounds indude boron oxide, boric acid, and metaboric acid. These boron compounds can be used singly or in combination. The amount of the boron compound used is selected as appropriate so that the boron content of the γ-β manganese dioxide obtained by baking is preferably 0.1 mass% to 3 mass% of the whole amount of the γ-β manganese dioxide. Generally, the boron compound can be used in an amount of approximately 1 mass% to 3 mass% of the total amount of the mixture of the raw material manganese dioxide, the boron compound, and the magnesium compound.

A magnesium compound is a compound containing magnesium. Preferable examples of magnesium compounds include magnesium oxide, magnesium hydroxide, and magnesium carbonate. These magnesium compounds can be used singly or in combination. The amount of the magnesium compound used can be selected as appropriate so that the magnesium content of the γ-β manganese dioxide obtained by baking is preferably 0.1 mass% to 5 mass% of the whole amount of the γ-β manganese dioxide. Generally, the magnesium compound can be used in an amount of approximately 1 mass% to 10 mass% of the total amount of the mixture of the raw material manganese dioxide, the boron compound, and the magnesium compound.

It is noted that by suitably selecting the mixing ratio of the raw material manganese dioxide to the boron compound and/or the mixing ratio of the raw material manganese dioxide to the magnesium compound, it is possible to adjust the specific surface area of the γ-β manganese dioxide obtained.

The baking of the mixture of the raw material manganese dioxide, the boron compound, and the magnesium compound is performed by heating, preferably at 350°C to 440°C, for 4 hours or more, preferably 4 hours to 24 hours. In this embodiment, by baking only once at such relatively low baking temperatures for such relatively short baking time, γ-β manganese dioxide with excellent high-temperature storage characteristics can be obtained. Therefore, the production of a positive electrode active material does not require a large number of steps and a long time, thus being advantageous in terms of production costs.

If the baking temperature is too low, the removal of bound water of the γ-β manganese dioxide may be insufficient. In this case, the moisture may seep into the battery 1, and the moisture may react with lithium contained in the negative electrode 11 to produce hydrogen gas, thereby causing the battery to swell or deform. On the other hand, if the baking temperature is too high, β crystallization may proceed to produce manganese dioxide with a significantly small specific surface area. When such manganese dioxide is used as the positive electrode active material, the discharge capacity of the lithium battery 1 may significantly decrease.

The X-ray diffraction pattern of γ-β manganese dioxide obtained in this manner in powder X-ray diffraction analysis using CuKa radiation is similar to that of heat-treated electrolytic manganese dioxide (γ-β MnO₂, "Denchi Binran (Battery Handbook), third edition", edited by Matsuda and Takehara, Maruzen, 2001, p120). However, the diffraction peak of γ-β manganese dioxide has a small peak intensity (peak height) and is broad, compared with the diffraction peak of heat-treated electrolytic manganese dioxide. That is, the γ-β manganese dioxide of this embodiment has a lower crystallinity than heat-treated electrolytic manganese dioxide.

The boron content of the γ-β manganese dioxide is preferably 0.1 mass% to 3 mass%, preferably 0.8 mass% to 1.4 mass% of the whole amount of the γ-β manganese dioxide. If the boron content is too small, production of gas may not be sufficiently suppressed during high temperature storage at 100°C or more. On the other hand, if the boron content is excessive, the specific surface area of the γ-β manganese dioxide becomes too small, and the crystallinity also lowers significantly. Hence, although production of gas during high temperature storage is suppressed, discharge polarization during battery discharge increases, so the drop of the discharge voltage and the decrease of the discharge capacity after high temperature storage may increase. The boron content can be determined, for example, by elemental analysis.

Magnesium cooperates with boron when baked to convert the raw material manganese dioxide to γ-β manganese dioxide, which is a mixed crystal of γ type and β type. In addition, magnesium also has the function of further suppressing production of gas during high temperature storage.

The magnesium content of the γ-β manganese dioxide is preferably 0.1 mass% to 5 mass%, more preferably 0.5 mass% to 2 mass% of the whole amount of the γ-β manganese dioxide, If the magnesium content is too small, production of gas may not be sufficiently suppressed during high temperature storage at 100°C or more. If the magnesium content is excessive, the action of magnesium to reduce the γ-β manganese dioxide increases, so the discharge capacity and discharge characteristics of the lithium battery 1 may deteriorate. The magnesium content can be determined, for example, by elemental analysis.

Also, while the specific surface area of the γ-β manganese dioxide is not particularly limited, it is preferably 8 m²/g to 30 m²/g, more preferably 8 m²/g to 28 m², and even more preferably 10 m²/g to 28 m²/g. When the specific surface area is adjusted in these ranges, the effect of improving the battery performance of the battery 1 such as battery capacity and discharge capacity and the effect of suppressing battery swelling after high temperature storage are exhibited with good balance. As a result, the lithium battery 1 has a practically sufficient battery performance and does not undergo deformation such as swelling upon high temperature storage at 100°C or more. In the present specification, specific surface area is determined by the nitrogen adsorption method described in an Example.

If the specific surface area of the γ-β manganese dioxide is too small, the current density in the battery reaction increases and thus the reaction polarization increases, so the battery voltage and the discharge capacity may decrease. On the other hand, if the specific surface area of the γ-β manganese dioxide is too large, the reaction area of the manganese dioxide and the organic electrolyte solution increases, so the oxidative decomposition reaction of the organic electrolyte solution during high temperature storage may be promoted. As a result, the amount of gas produced and the amount of reaction resistant components produced may increase.

The positive electrode mixture 16 may contain a binder and a conductive agent in addition to the γ-β manganese dioxide as the positive electrode active material.

Examples of binders include fluorocarbon resins, such as polytetrafluoroethylene, polyvinylidene fluoride and modified polyvinylidene fluoride, tetrafluoroethylene-hexafluoropropylene copolymers, tetrafluoroethylene-perfluoroalkylvinylether copolymers, vinylidene fluoride-tetrafluoroethylene copolymers, vinylidene fluoride-hexafluoropropylene copolymers, vinylidene fluoride-chlorotrifluoroethylene copolymers, ethylene-tetrafluoroethylene copolymers, vinylidene fluoride-pentafluoropropylene copolymers, propylene-tetrafluoroethylene copolymers, ethylene-chlorotrifluoroethylene copolymers, and vinylidene fluoride-hexafluoropropylene-tetrafluoroethylene copolymers, styrene butadiene rubber, modified acrylonitrile rubber, ethylene-acrylic add copolymers, and the like. These binders can be used singly or in combination.

Examples of conductive agents include carbon blacks such as acetylene black and ketjen black, graphites such as artificial graphites, and the like. These conductive agents can be used singly or in combination.

In the case of using a binder and/or a conductive agent, the γ-β manganese dioxide as the positive electrode active material is mixed with a binder and/or a conductive agent, and the resulting mixture is molded into a predetermined shape, to obtain the positive electrode mixture 16.

The positive electrode current collector ring 17 is a hollow, circular positive electrode current collector that is L-shaped in cross-secfion. In addition to this, various conventional positive electrode current collectors can be used. The positive electrode current collector can be prepared, for example, by forming a metal material such as aluminum, stainless steel, and the like into a predetermined shape. The positive electrode current collector ring 17 may be fitted to the molded positive electrode mixture 16. Alternatively, it may be integrally formed with the positive electrode mixture 16 when the positive electrode mixture 16 is molded. It is also possible to dispose the positive electrode mixture 16 in a predetermined position of the positive electrode case 13 and use the positive electrode mixture 16 as the positive electrode 10.

The negative electrode 11 may be composed only of a negative electrode active material, or may be composed of a negative electrode current collector and a negative electrode active material layer which is supported on the negative electrode current collector and indudes a negative electrode active material. The negative electrode active material is lithium metal or a lithium alloy The lithium alloy can be an alloy containing lithium and at least one metal element selected from the group consisting of aluminum, tin, magnesium, indium, and calcium. The content of other metal element(s) than lithium in the lithium alloy is preferably 0.1 mass% to 3 mass% of the whole amount of the lithium alloy. These negative electrode active materials can be used singly or in combination. The negative electrode current collector can be prepared, for example, by forming a metal material such as copper, stainless steel and the like into a predetermined shape. In this embodiment, the negative electrode case 14 serves as the negative electrode current collector.

The separator 12 is interposed between the positive electrode 10 and the negative electrode 11, and the kind of the material of the separator 12 is not particularly limited if the material is capable of withstanding the usage environment of the lithium battery 1 and is resistant to organic solvents. Examples of the separator 12 include polypropylene non-woven fabric, polyphenylene sulfide non-woven fabric, and microporous films made of olefin resins such as polyethylene and polypropylene. They can be used singly or in combination. Polyphenylene sulfide, which is resistant to high temperatures of 100°C or more, is particularly preferable as the material forming the separator 12.

The positive electrode case 13 and the negative electrode case 14 can be those commonly used in the field of lithium batteries; for example, they can be produced by forming a metal material such as stainless steel and the like into a predetermined shape. In this embodiment, the positive electrode case 13 and the negative electrode case 14 serve as the positive electrode terminal and the negative electrode terminal, respectively.

The insulating packing 15 mainly serves to insulate the positive electrode case 13 from the negative electrode case 14. The insulating packing 15 can be prepared, for example, by forming a heat-resistant synthetic resin such as polypropylene, polyphenylene sulfide, polyether ether ketone, and the like into a predetermined shape. In particular, polyphenylene sulfide is preferable since it has high resistance to high temperatures and solvents and good formability.

The organic electrolyte solution of this embodiment indudes an aromatic sulfone compound, a non-aqueous solvent, and a lithium salt. In conventional lithium batteries including manganese dioxide as a positive electrode active material, production of gas during high temperature storage at 100°C or more is mainly caused by reaction between manganese dioxide and the organic electrolyte solution (particularly non-aqueous solvent). However, the present inventor has found that the use of an organic electrolyte solution containing an aromatic sulfone compound in combination with the γ-β manganese dioxide as the positive electrode active material suppresses oxidative decomposition reaction of the non-aqueous solvent contained in the organic electrolyte solution during high temperature storage of the lithium battery 1 at 100°C or more.

The aromatic sulfone compound is preferably an alkyl ester of an aromatic sulfonic add. In such an alkyl ester of an aromatic sulfonic acid, examples of aromatic sulfonic acids include benzenesulfonic acid, p-toluene sulfonic acid, naphthalene sulfonic acid, and the like. Also, the alkyl moiety of such an alkyl ester of an aromatic sulfonic acid is preferably a C1 to C4 straight-chain alkyl group.

Preferable examples of alkyl esters of aromatic sulfonic acids include methyl benzene sulfonate, ethyl benzene sulfonate, butyl benzene sulfonate, methyl toluene sulfonate, methyl naphthalene sulfonate, and the like. Among them, for example, ethyl benzene sulfonate, methyl toluene sulfonate, and ethyl toluene sulfonate are more preferable. These aromatic sulfone compounds can be used singly or in combination.

The content of the aromatic sulfone compound in the organic electrolyte solution is preferably 0.1 mass% to 10 mass% of the whole amount of the organic electrolyte solution, more preferably 0.5 mass% to 4 mass% of the whole amount of the organic electrolyte solution. If the content of the aromatic sulfone compound is too small, gas-producing reaction at the positive electrode 10 during high temperature storage of the lithium battery 1 at 100°C or more may not be sufficiently suppressed. If the content of the aromatic sulfone compound is excessive, discharge polarization on the negative electrode 11 after high temperature storage of the lithium battery 1 at 100°C or more increases, so the discharge characteristics of the lithium battery 1 may deteriorate.

The non-aqueous solvent can be one commonly used in the field of lithium batteries, and preferable examples include high dielectric-constant solvents, low melting-point solvents, and chain carbonates. Examples of high dielectric-constant solvents include propylene carbonate, ethylene carbonate, and butylene carbonate. Examples of low melting-point solvents include 1,2-dimethoxyethane and 1,2-diethoxyethane. Examples of chain carbonates include diethyl carbonate, ethyl methyl carbonate, and dimethyl carbonate. Among them, in consideration of the solubility of lithium salts, high dielectric-constant solvents are preferable. These non-aqueous solvents can be used singly or in combination.

Also, in terms of increasing the ion conductivity of the non-aqueous solvent while further suppressing production of gas and deterioration of discharge characteristics due to high temperature storage, it is preferable to use a solvent mixture of a high dielectric-constant solvent and a low melting-point solvent (hereinafter referred to as "solvent mixture A"). In particular, it is preferable to use ethylene carbonate in combination with a low melting-point solvent, since ethylene carbonate has a high melting point of approximately 40°C and low ion conductivity at low temperatures. The high dielectric-constant solvent for use in the solvent mixture A is preferably propylene carbonate, and the low melting-point solvent for use in the solvent mixture A is preferably 1,2-dimethoxyethane. Thus, the preferable solvent mixture A contains propylene carbonate and 1,2-methoxyethane.

The content of the high dielectric-constant solvent in the solvent mixture A is preferably 30 mass% to 80 mass% of the whole amount of the solvent mixture A, with the remainder being a low melting-point solvent. If the content of the high dielectric-constant solvent is too small, the lithium salt is not sufficiently dissolved and dissociated, so the lithium ion conductivity of the solvent mixture A may lower. If the content of the high dielectric-constant solvent is excessive, the lithium ion conductivity of the solvent mixture A at low temperatures lowers, and the penetration of the organic electrolyte solution into the separator 12 and the positive electrode mixture 16 becomes insufficient, so discharge polarization may increase.

Example of the lithium salt dissolved in the non-aqueous solvent include lithium hexafluorophosphate (LiPF₆), lithium perchlorate (VClO₄), lithium tetrafluoroborate (LiBF₄), lithium trifluoromethyl sulfonate (LiCF₃SO₃), lithium bistrifluoromethylsulfonyl imide (LiN(SO₂CF₃)₂), lithium bispentafluoroethyl sulfonyl imide (LiN(SO₂C₂F₅)₂), and the like. These lithium salts can be used singly or in combination. The concentration of the lithium salt contained in 1 liter of the organic electrolyte solution is preferably 0.3 mol to 1.5 mol, and more preferably 0.5 mol to 1 mol.

### [Examples]

The invention is hereinafter described specifically by way of Examples and Comparative Examples.

### [Example 1]

### [Preparation of γ-β manganese dioxide]

Electrolytic manganese dioxide (volume basis median diameter 30 µm), boron oxide (B₂O₃), and magnesium hydroxide (Mg(OH)₂) were mixed in a mass ratio of 100:3.5:5.5. The resulting mixture was baked at 420°C for 8 hours to obtain γ-β manganese dioxide containing boron and magnesium. The γ-β manganese dioxide had a mean particle size (volume basis median diameter) of 31 µm. In the following Examples and Comparative Examples, the same electrolytic manganese dioxide was used as a raw material.

The mean particle size (particle size distribution) of the γ-β manganese dioxide particles obtained was determined by using a flow particle image analyzer (trade name: FPIA-3000, available from Sysmex Corporation). Specifically, the γ-β manganese dioxide particles were dispersed in water containing a surfactant to prepare a sample, and images of the sample were taken with the flow particle image analyzer (FPIA-3000). The images of the respective γ-β manganese dioxide particles were analyzed to determine the particle size distribution of the γ-β manganese dioxide particles.

The specific surface area of the γ-β manganese dioxide was measured by the BET single point method under the following conditions, and found to be 15.3 m²/g.
Measuring apparatus: Macsorb HM-1201 (trade name) available from Mountech Co., Ltd.
Sample mass: 0.4 to 0.3 g
Dehydration condition before measurement: dry nitrogen gas was supplied at 120°C for 60 minutes
Adsorption amount calibration gas: a mixed gas containing helium and nitrogen in a volume ratio of 7:3
Adsorption measurement temperature: Cooled from 20°C to -196°C
Elimination measurement temperature: Heated from -196°C to 20°C

The amounts of boron and magnesium contained in the γ-β manganese dioxide obtained were determined by adding hydrochloric acid to the γ-β manganese dioxide, heating it for dissolution, diluting the resultant solution suitably, and subjecting it to an IPC emission spectroscopic analysis. As a result, the boron content was 1.0 mass%, and the magnesium content was 2.1 mass%.

### (Preparation of positive electrode)

The γ-β manganese dioxide (positive electrode active material) thus obtained, ketjen black (conductive agent), and a tetrafluoroethylene-hexafluoropropylene copolymer (binder, trade name: ND-110, available from Daikin Industries, Ltd.) were mixed in a mass ratio of 100:5:5. The resulting mixture was mixed with a suitable amount of water and sufficiently kneaded to obtain a positive electrode mixture paste. This positive electrode mixture was dried at 100°C, and compression molded by a hydraulic press with a predetermined mold to obtain a positive electrode. The positive electrode was dried at 250°C for 4 hours for use in the production of a battery described below.

### (Preparation of organic electrolyte solution)

An organic electrolyte solution was prepared by dissolving LiClO₄ at a concentration of 0.6 mol/L in a solvent mixture of propylene carbonate (hereinafter "PC") and 1,2-dimethoxyethane (hereinafter "DME") in a ratio of 7:3 (volume ratio), and further dissolving ethyl benzene sulfonate at a concentration of 2 mass% of the whole amount of the organic electrolyte solution.

### (Production of battery)

A coin lithium battery as illustrated in FIG 1 was produced. First, lithium metal (negative electrode) punched out from a hoop with a predetermined die was pressed to the inner bottom face of the flat portion of a negative electrode case made of stainless steel. The edge of the negative electrode case was fitted with an insulating packing made of polyphenylene sulfide.

The dried positive electrode prepared in the above manner was inserted into a positive electrode current collector ring that was L-shaped in cross-section and made of stainless steel. This was mounted on the inner face of a positive electrode case made of stainless steel. Further, a separator (thickness 100 µm), which was prepared by punching out polyphenylene sulfide non-woven fabric into a circular shape, was mounted on the positive electrode. The organic electrolyte solution was injected into the positive electrode case to impregnate the positive electrode and the separator with the organic electrolyte solution.

Thereafter, the negative electrode case was mounted so as to cover the positive electrode case, so that the negative electrode faced the positive electrode with the separator therebetween and that the negative electrode was in contact with the separator. The edge of the positive electrode case was crimped onto the negative electrode case with an insulating packing fitted therebetween, to seal the battery. In this way, a coin lithium battery with a diameter of 24 mm, a height of 5.0 mm, and a design capacity of 500 mAh was produced. Six batteries were produced in the same manner. The production of the batteries was performed in a dry air with a dew point of -50°C or less. This also holds true for the following Examples and Comparative Examples.

### [Example 2]

Electrolytic manganese dioxide, boric add (H₃BO₃), and magnesium oxide were mixed in a mass ratio of 100:1:9.5, and the resulting mixture was baked at 400°C for 8 hours to synthesize γ-β manganese dioxide containing boron and magnesium. The γ-β manganese dioxide thus obtained had a specific surface area of 26 m²/g. The mean particle size (volume basis median diameter) thereof was 30 µm. The γ-β manganese dioxide had a boron content of 0.1 mass% and a magnesium content of 5 mass%. These values of physical properties were measured in the same manner as in Example 1.

Coin lithium batteries of Example 2 were produced in the same manner as in Example 1, except that the γ-β manganese dioxide prepared in the above manner was used as the positive electrode active material and that the organic electrolyte solution used was prepared by dissolving LiClO₄ at a concentration of 1.0 mol/L in a solvent mixture of PC and DME in a volume ratio of 7:3 and further dissolving methyl benzene sulfonate at a concentration of 10 mass% of the whole amount of the organic electrolyte solution.

### [Example 3]

Electrolytic manganese dioxide, boron oxide (B₂O₃), and magnesium oxide were mixed in a mass ratio of 100:11:0.2, and the resulting mixture was baked at 360°C for 12 hours to synthesize γ-β manganese dioxide containing boron and magnesium. The γ-β manganese dioxide thus obtained had a specific surface area of 8 m²/g. The mean particle size (volume basis median diameter) thereof was 35 µm. The γ-β manganese dioxide had a boron content of 3 mass% and a magnesium content of 0.1 mass%. These values of physical properties were measured in the same manner as in Example 1.

Coin lithium batteries of Example 3 were produced in the same manner as in Example 1, except that the γ-β manganese dioxide prepared in the above manner was used as the positive electrode active material and that the organic electrolyte solution used was prepared by dissolving LiClO₄ at a concentration of 1.0 mol/L in a solvent mixture of PC and DME in a volume ratio of 6:4 and further dissolving p-methyl toluenesulfonate at a concentration of 0.1 mass% of the whole amount of the organic electrolyte solution.

### [Example 4]

Electrolytic manganese dioxide, boron oxide (B₂O₃), and magnesium oxide were mixed in a mass ratio of 100:3:1.5, and the resulting mixture was baked at 440°C for 5 hours to obtain low-crystalline γ-β manganese dioxide containing boron and magnesium. The γ-β manganese dioxide thus obtained had a specific surface area of 13.1 m²/g. The mean particle size (volume basis median diameter) thereof was 35 µm. The γ-β manganese dioxide had a boron content of 0.8 mass% and a magnesium of content of 0.8 mass%. These values of physical properties were measured in the same manner as in Example 1.

Coin lithium batteries of Example 4 were produced in the same manner as in Example 1, except that the γ-β manganese dioxide prepared in the above manner was used as the positive electrode active material and that the organic electrolyte solution used was prepared by dissolving LiClO₄ at a concentration of 0.8 mol/L in a solvent mixture of PC and DME in a volume ratio of 6:4 and further dissolving methyl benzene sulfonate at a concentration of 4 mass% of the whole amount of the organic electrolyte solution.

### [Comparative Example 1]

Electrolytic manganese dioxide was baked at 400°C for 4 hours to obtain baked manganese dioxide. The baked manganese dioxide thus obtained had a γ-β crystal and a BET specific surface area of 24.7 m²/g. The mean particle size (volume basis median diameter) thereof was 30 µm. These values of physical properties were measured in the same manner as in Example 1. Coin lithium batteries of Comparative Example 1 were produced in the same manner as in Example 1, except that the baked manganese dioxide was used as the positive electrode active material and that the organic electrolyte solution used was prepared by dissolving LiClO₄ at a concentration of 1.0 mol/L in a solvent mixture of PC and DME in a volume ratio of 6:4.

### [Comparative Example 2]

Electrolytic manganese dioxide, boron oxide, and magnesium hydroxide were mixed in a mass ratio of 100:2.5:4, and the resulting mixture was baked at 380°C for 8 hours to synthesize γ-β manganese dioxide containing boron and magnesium. The γ-β manganese dioxide had a specific surface area of 26.1 m²/g. The mean particle size (volume basis median diameter) thereof was 30 µm. The γ-β manganese dioxide had a boron content of 0.7 mass% and a magnesium content of 1.5 mass%. Coin lithium batteries of Comparative Example 2 were produced in the same manner as in Comparative Example 1, except that the γ-β manganese dioxide prepared in the above manner was used as the positive electrode active material.

### [Comparative Example 3]

Coin lithium batteries of Comparative Example 3 were produced in the same manner as in Comparative Example 1, except that the organic electrolyte solution used was prepared by dissolving LiClO₄ at a concentration of 1.0 mol/L in a solvent mixture of PC and DME in a volume ratio of 6:4 and further adding and mixing ethyl benzene sulfonate at a concentration of 5 mass%.

### [Evaluation]

The following evaluations were made.

### (Measurement of initial discharge capacity)

The respective batteries of Examples 1 to 4 and Comparative Examples 1 to 3 were preliminarily discharged at a constant current of 3 mA for 5.5 hours, and then subjected to aging at 60°C for 3 days. After the aging, the batteries were visually inspected and measured for their open circuit voltages (OCV) to confirm that they were not defective.

Three batteries of each of Examples 1 to 4 and Comparative Examples 1 to 3 were discharged to 2 V at 25°C at a constant resistance of 10 kΩ to measure their initial discharge capacities. Table 1 shows the average values of initial discharge capacities of three batteries for each of Examples and Comparative Examples.

### (Large-current discharge characteristic before storage)

In a low temperature environment of -20°C, the three batteries of each of Examples 1 to 4 and Comparative Examples 1 to 3 were discharged at a current value of 5 mA for 1 second to measure their lowest discharge voltages (CCV), i.e., their large-current discharge characteristic before storage. Table 1 shows CCVs before storage (average values of three batteries).

### (High-temperature storage characteristic)

The three batteries of each of Examples 1 to 4 and Comparative Examples 1 to 3 were stored in a high temperature environment of 100°C for 3 days. After the high temperature storage, the batteries were placed in a room temperature environment, and the total heights of the batteries (the thicknesses of the batteries) were measured. The difference between the battery total height after the high temperature storage and the battery total height before the high temperature storage was calculated to obtain the amount of battery swelling after storage (the average value of three batteries) due to the 3-day storage at 100°C. Also, the batteries stored in the high temperature environment of 100°C for 3 days were discharged in a low temperature environment of -20°C at a current value of 5 mA for 1 second to measure their lowest discharge voltages (CCV), i.e., their CCVs after storage (the average value of three batteries). Table 1 shows the amounts of battery swelling after storage and CCVs after storage.

**[Table 1]**

| | | B (%) | Mg (%) | Additive | | Initial discharge capacity (mAh) | CCV before storage (V) | Amount of swelling after storage (mm) | CCV after storage (V) |
|---|---|---|---|---|---|---|---|---|---|
| | | | | Kind | Amount (%) | | | | |
| Example | 1 | 1 | 2.1 | X | 2 | 485 | 2.882 | 0.15 | 2.683 |
| | 2 | 0.1 | 5 | Y | 10 | 475 | 2.766 | 0.18 | 2.261 |
| | 3 | 3 | 0.1 | Z | 0.1 | 482 | 2.729 | 0.12 | 2.285 |
| | 4 | 0.8 | 0.8 | Y | 4 | 494 | 2.874 | 0.13 | 2.698 |
| Comp. Example | 1 | 0 | 0 | - | - | 503 | 2.956 | 0.84 | < 0 |
| | 2 | 0.7 | 1.5 | - | - | 487 | 2.902 | 0.57 | 1.725 |
| | 3 | 0 | 0 | X | 5 | 496 | 2.758 | 0.61 | 1.434 |

| | | | | | | | | | |
|---|---|---|---|---|---|---|---|---|---|
| Additive X: ethyl benzene sulfonate Additive Y: methyl benzene sulfonate Additive Z: p-methyl toluenesulfonate | | | | | | | | | |

### (Initial discharge capacity)

The batteries of Examples 1 to 4 had slightly lower initial discharge capacities than the battery of Comparative Example 1. This is probably because the inclusion of boron and magnesium in the γ-β manganese dioxide (positive electrode active material) made the manganese valence low and the crystallinity slightly low. Likewise, the battery of Comparative Example 2, which used manganese dioxide containing boron and magnesium as the positive electrode active material, also had a decreased initial discharge capacity. However, the decreases in the initial discharge capacities of batteries of Examples 1 to 4 are slight and not a large problem in practical use.

### (Large-current discharge characteristic before storage)

The batteries of Examples 1 to 4 exhibited CCV values at -20°C before storage of approximately 2.7 to 2.9 V, whereas the batteries of Comparative Examples 1 and 2 exhibited CCV values before storage of 2.9 V or more.
This is probably because the aromatic sulfone compound added to the organic electrolyte solution increased the discharge polarization on the negative electrode. Likewise, the battery of Comparative Example 3, in which an aromatic sulfone compound was added to the organic electrolyte solution, also had a low CCV value of approximately 2.75 V, thereby showing that there was an influence of the addition of the aromatic sulfone compound. However, the decreases in the CCV values before storage of batteries of Examples 1 to 4 are slight and not a large problem in practical use.

### (High-temperature storage characteristic [battery swelling])

The total heights of batteries of Examples 1 to 4 and Comparative Examples 1 to 3 before the 3-day storage at 100°C were in the range of 4.8 mm to 4.9 mm. In the batteries of Examples 1 to 4, the amounts of battery swelling after the 3-day storage at 100°C were 0.12 to 0.18 mm, which are very small values. This indicates that production of gas inside the batteries during the high temperature storage at 100°C, i.e., the oxidative decomposition reaction of the non-aqueous solvent on the positive electrode, is significantly suppressed.

Contrary to this, the battery of Comparative Example 1 exhibited a large swelling of 0.84 mm after the 3-day storage at 100°C. Also, the impedance of battery of Comparative Example 1 at 1 kHz was measured, and it was found that the internal resistance of the battery increased to 100 Ω or more, thereby making the discharge not smooth. Also, the batteries of Comparative Example 2 and Comparative Example 3 exhibited a relatively large battery swelling of 0.5 mm or more, although the swelling is smaller than that of the battery of Comparative Example 1. The battery of Comparative Example 2 uses a positive electrode including manganese dioxide containing boron and magnesium in combination with an organic electrolyte solution containing no aromatic sulfone compound. The battery of Comparative Example 3 uses a positive electrode including manganese dioxide containing neither boron nor magnesium in combination with an organic electrolyte solution containing an aromatic sulfone compound.

The above results indicate that the combination of γ-β manganese dioxide containing boron and magnesium and an organic electrolyte solution containing an aromatic sulfone compound significantly suppresses the oxidative decomposition of the non-aqueous solvent and battery swelling during high temperature storage at 100°C or more.

### (High-temperature storage characteristic [large-current discharge characteristic])

The batteries of Examples 1 to 4 had CCV values after 3-day storage at 100°C of 2.2 V or more, and the batteries of Examples 1 and 4 in particular had a CCV value after storage of approximately 2.7 V Contrary to this, the battery of Comparative Example 1 with a large battery swelling exhibited a discharge voltage of 0 V or less, being unable to discharge. Also, the battery of Comparative Example 2, in which only the positive electrode was improved, exhibited 1.725 V, and the battery of Comparative Example 3, in which only the organic electrolyte solution was improved, exhibited 1.434 V, which were both as low as less than 2 V

The reason why the CCV values of Comparative Examples 1 to 3 after the 3-day storage at 100°C were significantly low is probably that these batteries swelled signiflcantly. That is, the reason is probably as follows. The oxidative decomposition reaction of the non-aqueous solvent by the positive electrode active material was not suppressed, and thus large amounts of gas were produced. Hence, the internal pressure of the battery increased significantly, thereby impairing the electrical connection and ion conductivity inside the battery, etc. As a result, the CCV value after the 3-day storage at 100°C lowered significantly.

However, in Example 2 with a large amount of aromatic sulfone compound and Examples 2 and 3 with large amounts of boron and magnesium, battery swelling can be suppressed, but discharge polarization after storage is affected. This indicates that there is a trade-off between suppression of gas production and discharge polarization characteristics.

Manganese dioxide, which is used as a positive electrode active material for lithium batteries, has a strong ability to oxidize organic solvents. Thus, the high-temperature storage characteristics of conventional lithium batteries deteriorate markedly. On the other hand, the invention is characterized by adding boron and magnesium to manganese dioxide to produce γ-β manganese dioxide and using an organic electrolyte solution containing an aromatic sulfone compound. As such, it is probably that the specific surface area of manganese dioxide and the ability of manganese dioxide to oxidize the organic solvent can be controlled, and the high-temperature storage characteristics of lithium batteries can be improved.

It should be noted that production of gas during high temperature storage is mainly caused by the reaction between manganese dioxide and the organic electrolyte solution. Thus, the effect of suppressing gas production is thought to change depending on the kind of the non-aqueous solvent contained in the organic electrolyte solution, the composition thereof, the presence or absence of an additive, etc. In the invention, organic electrolyte solutions with compositions different from those described in the foregoing Examples may also be used. Further, the organic electrolyte solutions according to the invention may contain additives that are known to suppress gas production.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Industrial Applicability]

The lithium battery of the invention has excellent high-temperature storage characteristics as well as being advantageous in terms of costs. The lithium battery is useful, for example, as the power source for portable electronic appliances, in-car electronic devices, etc.

## Claims

1. A lithium battery comprising:
a positive electrode including a positive electrode active material;
a negative electrode including lithium metal or a lithium alloy as a negative electrode active material;
a separator interposed between the positive electrode and the negative electrode; and
an organic electrolyte solution,
wherein the positive electrode active material comprises γ-β manganese dioxide containing boron and magnesium, and
the organic electrolyte solution indudes an aromatic sulfone compound, a non-aqueous solvent, and a lithium salt.

2. The lithium battery in accordance with daim 1,
wherein the γ-β manganese dioxide has a boron content of 0.1 mass% to 3 mass% of the whole amount of the γ-β manganese dioxide, and
the γ-β manganese dioxide has a magnesium content of 0.1 mass% to 5 mass% of the whole amount of the γ-β manganese dioxide.

3. The lithium battery in accordance with daim 1, wherein the aromatic sulfone compound is an alkyl ester of an aromatic sulfonic acid.

4. The lithium battery in accordance with daim 3, wherein the alkyl ester of the aromatic sulfonic add has an alkyl moiety which is a C1 to C4 straight-chain alkyl group.

5. The lithium battery in accordance with daim 3, wherein the aromatic sulfonic acid is at least one selected from the group consisting of benzenesulfonic acid, p-toluene sulfonic acid, and naphthalene sulfonic acid.

6. The lithium battery in accordance with daim 1, wherein the content of the aromatic sulfone compound is 0.1 mass% to 10 mass% of the whole amount of the organic electrolyte solution.

7. The lithium battery in accordance with claim 1, wherein the non-aqueous solvent is a solvent mixture of a high dielectric-constant solvent and a low melting-point solvent.
